# EUROPÄISCHE PATENTSCHRIFT

(11) **EP 1 301 144 B1**
(45) Veröffentlichungstag und Bekanntmachung des Hinweises auf die Patenterteilung: **25.08.2010**
(21) Anmeldenummer: 01960453.7
(22) Anmeldetag: 04.07.2001
(51) Int. Cl.: A61C 17/34

(54) **ELEKTRISCHE ZAHNBÜRSTE**
ELECTRIC TOOTHBRUSH
BROSSE A DENTS ELECTRIQUE

(30) Priorität: 19.07.2000 DE 10034957
(43) Veröffentlichungstag der Anmeldung: 16.04.2003
(73) Patentinhaber: Braun GmbH, 61476 Kronberg (DE)
(72) Erfinder: FRITSCH, Thomas, 65817 Eppstein (DE); HILFINGER, Peter, 61350 Bad Homburg (DE)
(86) Internationale Anmeldenummer: PCT/EP2001/007615
(87) Internationale Veröffentlichungsnummer: WO 2002/005725

(56) Entgegenhaltungen:
- WO-A-01/32095
- DE-A- 4 309 035
- US-A- 5 836 030

## Beschreibung

Die Erfindung betrifft eine elektrische Zahnbürste mit einem Borstenteil nach dem Oberbegriff des Anspruchs 1.

Eine derartige elektrische Zahnbürste ist aus der WO 01/32095 bekannt. Es ist ferner eine elektrische Zahnbürste bekannt (DE 43 09 035 C2) bzw. im Handel erhältlich (WO 97/24079), bei der das Borstenteil zusammen mit einem Trägerrohr um die Längsachse des Trägerrohrs und damit um eine senkrecht zu den Borstenbüscheln verlaufende Achse hin- und hergeschwenkt wird. Ebenfalls kann es sich um eine elektrische Zahnbürste handeln, bei der das Borstenteil um eine parallel zu den Borstenbüscheln verlaufende Achse in eine Drehbewegung oder eine alternierende Schwenkbewegung bzw. oszillierende Rotation versetzt wird. Wesentlich ist, dass eine sich fortlaufend wiederholende, insbesondere periodische Bewegung des Borstenteils vorhanden ist.

Wird die elektrische Zahnbürste von einem Benutzer zur Zahnreinigung verwendet, so werden die freien Enden der Borstenbüschel auf die Oberflächen der Zähne aufgesetzt. Durch die sich fortlaufend wiederholende Bewegung des Borstenteils wird eine reinigende Wirkung der Borstenbüschel auf den Oberflächen der Zähne erreicht.

Aufgabe der Erfindung ist es, eine elektrische Zahnbürste zu schaffen, die eine weiter verbesserte Zahnreinigung insbesondere in Interdentalbereichen ermöglicht und einfach aufgebaut ist.

Diese Aufgabe wird bei einer elektrischen Zahnbürste der eingangs genannten Art erfindungsgemäß durch die Merkmale des Anspruchs 1 gelöst.

Durch die Erfindung wird eine sich von der ersten Bewegung des Borstenteils unterscheidende zweite Bewegung des Borstenzusatzteils in Borstenrichtung zur Verfügung gestellt, mit der bei der Zahnreinigung insbesondere gezielt die Interdentalbereiche gereinigt werden können. Damit ist es möglich, die Reinigung der Oberflächen der Zähne wie bisher mit Hilfe der Borsten oder Borstenbüschel des Borstenteils durchzuführen, während die Reinigung der Interdentalbereiche davon unabhängig mittels der zweiten Bewegung des Borstenzusatzteils erreichbar ist. Dabei ist es besonders zweckmäßig, dass das Borstenzusatzteil derart ausgebildet und auf die sich fortlaufend wiederholende Bewegung des Borstenteils abgestimmt ist, dass sich der Resonanzeffekt ergibt. Insgesamt wird durch die beiden sich voneinander unterscheidenden Bewegungen des Borstenteils und des Borstenzusatzteils eine verbesserte Reinigung der Zähne und insbesondere der Interdentalbereiche erreicht. Zusätzlich weist die Zahnbürste einen einfachen konstruktiven Aufbau auf.

Gemäß der Erfindung weist das Borstenzusatzteil keine starre Verbindung mit dem Borstenteil auf. Durch die statt dessen vorgesehene flexible bzw. elastische Verbindung zwischen dem Borstenteil und dem Borstenzusatzteil wird erfindungsgemäß erreicht, dass das Borstenteil und das Borstenzusatzteil voneinander unterschiedliche Bewegungen ausführen, die zur Reinigung der Oberflächen der Zähne und der Interdentalbereiche herangezogen werden können.

Gemäß der Erfindung ist das Borstenzusatzteil über ein Federelement mit dem Borstenteil verbunden. Dabei ist es herstellungstechnisch besonders zweckmäßig, wenn das Borstenteil, das Borstenzusatzteil und das Federelement einstückig ausgebildet sind.

Auf diese Weise ist es erfindungsgemäß möglich, die erwünschte flexible Verbindung zwischen dem Borstenteil und dem Borstenzusatzteil ohne großen konstruktiven Aufwand zu erreichen. Insbesondere die einstückige Ausführung stellt eine besonders einfache und kostengünstige Realisierung der Erfindung dar.

Erfindungsgemäß ist die zweite Bewegung des Borstenzusatzteils von der ersten Bewegung des Borstenteils anregbar. Die zweite Bewegung des Borstenzusatzteils ist also insoweit von der ersten Bewegung des Borstenteils abhängig, als die zweite Bewegung durch die erste Bewegung angeregt wird. Gleichzeitig unterscheidet sich jedoch die erste Bewegung aufgrund der flexiblen Verbindung zwischen dem Borstenteil und dem Borstenzusatzteil von der zweiten Bewegung.

Bei einer vorteilhaften Weiterbildung der Erfindung ist das Borstenzusatzteil mittels des Resonanzeffekts in eine sich fortlaufend wiederholende oder periodische Bewegung versetzbar.

Erfindungsgemäß ist die zweite Bewegung des Borstenzusatzteils über einen Resonanzeffekt mit der ersten Bewegung des Borstenteils gekoppelt. Das Borstenzusatzteil wird durch einen Resonanzeffekt von der ersten Bewegung des Borstenteils zur Ausführung seiner zweiten Bewegung angeregt. Die Erfindung nutzt den genannten Resonanzeffekt aus, um das Borstenzusatzteil in die zweite Bewegung zu versetzen. Dies stellt eine besonders einfache und damit kostengünstige Art und Weise dar, die beiden erfindungsgemäßen unterschiedlichen Bewegungen von Borstenteil und Borstenzusatzteil zu erzeugen.

Besonders vorteilhaft ist es, wenn die zweite Bewegung des Borstenzusatzteils eine größere Amplitude aufweist als die erste Bewegung des Borstenteils. Dies kann dadurch erreicht werden, dass der genannte Resonanzeffekt möglichst stark zur Geltung gebracht wird. Auch kann die Frequenz bzw. die zeitliche Abhängigkeit und/oder die Bewegungsrichtung der zweiten Bewegung unterschiedlich zur ersten Bewegung sein.

Gemäß der Erfindung ist das Borstenzusatzteil mit Borstenbüscheln versehen, und es erfolgt die zweite Bewegung des Borstenzusatzteil in Borstenrichtung. Dies bringt den wesentlichen Vorteil mit sich, dass die zweite Bewegung der Borstenbüschel des Borstenzusatzteils gezielt in Richtung zur Zahnoberfläche ausgerichtet ist. Liegen die Borstenbüschel des Borstenzusatzteil auf einer Oberfläche eines Zahnes an, so wird die zweite, zur Zahnoberfläche gerichtete Bewegung dieser Borstenbüschel gedämpft. Befinden sich die Borstenbüschel des Borstenzusatzteils jedoch im Bereich eines Zahnzwischenraums, also in einem Interdentalbereich, so können die Borstenbüschel des Borstenzusatzteils ihre gerichtete zweite Bewegung im wesentlichen ungedämpft ausführen. Dies hat zur Folge, dass die Borstenbüschel des Borstenzusatzteils gezielt und tief in den Interdentalbereich eindringen und dort die angrenzenden Zahnoberflächen reinigen. Dies stellt eine wesentliche Verbesserung der Zahnreinigung in den Zahnzwischenräumen dar.

Dabei ist es zweckmäßig, wenn das Borstenzusatzteil derart geführt ist, dass es sich im wesentlichen in Borstenrichtung bewegen kann. Auf diese einfache Art und Weise wird die zielgerichtete Bewegung der Borstenbüschel des Borstenzusatzteils und die damit verbundenen Vorteile erreicht.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, auch unabhängig von ihrer Zusammenfassung in den Patentansprüchen oder deren Rückbeziehung sowie unabhängig von ihrer Formulierung bzw. Darstellung in der Beschreibung bzw. in der Zeichnung.
Figur 1 zeigt ein erstes Ausführungsbeispiel einer erfindungsgemäßen elektrisch angetriebenen Zahnbürste in einem schematischen Längsschnitt in einer zur Borstenrichtung parallelen Ebene sowie einem schematischen Querschnitt entlang der Ebene B-B,
Figur 2 zeigt ein zweites Ausführungsbeispiel einer erfindungsgemäßen elektrisch angetriebenen Zahnbürste in einem schematischen Längsschnitt in einer zur Borstenrichtung parallelen Ebene sowie in einem schematischen Querschnitt entlang der Ebene B-B,
Figur 3 zeigt ein drittes Ausführungsbeispiel einer erfindungsgemäßen elektrisch angetriebenen Zahnbürste in einem schematischen Längsschnitt in einer zur Borstenrichtung rechtwinklig ausgerichteten Ebene sowie in einem schematischen Längsschnitt entlang der Ebene A-A und in einem schematischen Querschnitt entlang der Ebene B-B,
Figur 4 zeigt ein viertes Ausführungsbeispiel einer erfindungsgemäßen elektrisch angetriebenen Zahnbürste in einem schematischen Längsschnitt in einer zur Borstenrichtung parallelen Ebene sowie in einem schematischen Querschnitt entlang der Ebene B-B,
Figur 5 zeigt ein fünftes Ausführungsbeispiel einer erfindungsgemäßen elektrisch angetriebenen Zahnbürste in einem schematischen Längsschnitt in einer zur Borstenrichtung parallelen Ebene, und
Figur 6 zeigt ein sechstes Ausführungsbeispiel einer erfindungsgemäßen elektrisch angetriebenen Zahnbürste in einem schematischen Längsschnitt in einer zur Borstenrichtung parallelen Ebene.

Eine elektrisch angetriebene Zahnbürste weist ein Griffteil und einen Borstenträger auf. Der Borstenträger kann auf das Griffteil aufsteckbar ausgebildet sein. ,

Der Borstenträger weist ein Trägerrohr und ein Borstenteil auf. Das Borstenteil ist mit einem Borstenfeld versehen, das eine Vielzahl von Borsten aufweist, die in Borstenbüscheln angeordnet sind. Die Borsten stehen etwa rechtwinklig von dem Borstenteil ab und legen damit eine Borstenrichtung fest.

In dem Griffteil ist unter anderem ein Antrieb untergebracht, mit dem der Borstenträger als ganzes und/oder das Borstenteil als ganzes und/oder Teile des Borstenfelds und/oder einzelne Borstenbüschel in eine Bewegung versetzt werden kann.

Bei dem Antrieb kann es sich um jegliche Art eines Antriebs handeln, also um einen rotierenden Antrieb, einen oszillierenden Antrieb, einen alternierenden Antrieb, einen exzentrischen Antrieb, einen eine Unwucht erzeugenden Antrieb und/oder dergleichen. Der Antrieb kann in der Form eines Elektromotors oder eines sonstigen Motors realisiert sein. Die Übertragung der von dem Antrieb erzeugten Bewegung auf den Borstenträger bzw. das Borstenteild bzw. die Borstenbüschel kann auf beliebige Art und Weise durchgeführt werden, beispielsweise mittels einer Antriebsachse oder dergleichen.

Der Antrieb kann den Borstenträger und/oder das Borstenteil und/oder Teile des Borstenfelds und/oder die Borstenbüschel in jegliche Art einer Bewegung versetzen. So können der Borstenträger und/oder das Borstenteil und/oder das Borstenfeld bzw. Teile davon und/oder die Borstenbüschel in eine alternierende Bewegung um eine parallel oder rechtwinklig oder in einem sonstigen Winkel zur Borstenrichtung ausgerichtete Achse versetzt werden.

Wesentlich ist, dass der Borstenträger und/oder das Borstenteil und/oder das Borstenfeld und/oder Teile des Borstenfelds und/oder die Borstenbüschel in eine sich fortlaufend wiederholende Bewegung versetzt wird bzw. werden, die eine bestimmte Frequenz besitzt bzw. besitzen. Die Richtung der Bewegung ist dabei nicht wesentlich. Die Bewegung kann auch völlig ungerichtet sein. Diese vorstehend beschriebene Bewegung wird auch als erste Bewegung bezeichnet.

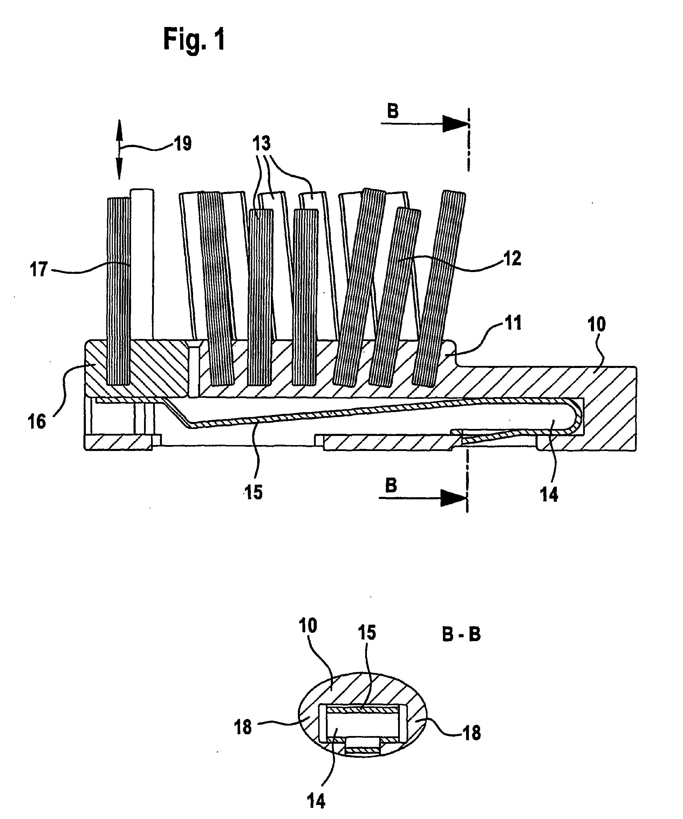

In der Figur 1 ist ein erstes Ausführungsbeispiel einer elektrisch angetriebenen Zahnbürste dargestellt, die ein Trägerrohr 10 mit einem Borstenteil 11 aufweist. Von dem Borstenteil 11 steht ein Borstenfeld 12 ab, das eine Vielzahl von Borstenbüscheln 13 aufweist. In der Figur 1 wird das Trägerrohr 10 von einem Antrieb in eine alternierende Schwenkbewegung um seine Längsachse versetzt.

Im Bereich des Trägerrohrs 10 ist eine Ausnehmung 14 vorhanden, in die ein Federelement 15 eingeschoben und festgeklemmt ist. Das Federelement 15 ist in Längsrichtung des Trägerrohrs 10 angeordnet und erstreckt sich über den Bereich des Borstenteils 11 hinaus. Bei dem Federelement 15 kann es sich beispielsweise um eine Blattfeder handeln.

An dem dem Trägerrohr 10 abgewandten Ende des Borstenteils 11 ist ein Borstenzusatzteil 16 vorgesehen, von dem ein Borstenzusatzfeld 17 mit einer Mehrzahl von Borstenbüscheln absteht. Das Borstenzusatzfeld 17 bildet eine Ergänzung des von dem Borstenteil 11 gebildeten Borstenfelds 12. Insbesondere in einem Ruhezustand bilden die freien Enden der Borstenbüschel des Borstenfelds 12 und des Borstenzusatzfelds 17 eine etwa ebene Fläche.

Das Borstenzusatzteil 16 ist mit dem freien Ende des Federelements 15 fest verbunden. Dies ist die einzige Verbindung des Borstenzusatzteils 16 mit dem Borstenteil 11 und dem Trägerrohr 10. Damit ist das Borstenzusatzteil 16 nicht starr, sondern nur flexibel über das Federelement 15 mit dem Borstenteil 11 und dem Trägerrohr 10 verbunden.

Weiterhin ist das Federelement 15 und/oder das Borstenzusatzteil 16 derart beispielsweise von Seitenwänden 18 des Trägerrohrs 10 geführt, dass sich das Borstenzusatzteil 16 nur in Borstenrichtung bewegen kann. Diese Führung ist insbesondere aus dem Querschnitt B-B der Figur 1 ersichtlich. Die Borstenrichtung und damit die Bewegungsrichtung des Borstenzusatzteils 16 ist in der Figur 1 mit einem Pfeil 19 gekennzeichnet.

Die Abmessungen des Federelements 15 und des Borstenzusatzteils 16 und die Federkonstante des Federelements 15 sind derart ausgelegt, dass im eingeschalteten Zustand der elektrisch angetriebenen Zahnbürste ein Resonanzeffekt entsteht. Dies bedeutet, dass im eingeschalteten Zustand das Borstenzusatzteil 16 an dem Federelement 15 in eine Resonanzbewegung versetzt wird, wobei die Frequenz der Resonanzbewegung etwa einer Resonanzfrequenz des elektrischen Antriebs entspricht.

Durch den Resonanzeffekt und die daraus entstehende Resonanzbewegung des Borstenzusatzteils 16 sowie aufgrund der Führung des Borstenzusatzteils 16 in Borstenrichtung wird das Borstenzusatzfeld 17 zu einer Bewegung in Richtung des Pfeils 19 angeregt. Dies bedeutet, dass das Borstenzusatzfeld 17 fortlaufend zu einer gerichteten Bewegung in Borstenrichtung angeregt wird. Diese Bewegung ist also gerichtet und wird auch als zweite Bewegung bezeichnet.

Die Bewegung des Borstenzusatzfelds 17 kann dabei eine größere Amplitude aufweisen als die Bewegung des Borstenfelds 11. Dies hängt von der Abstimmung des Federelements 15 und des Borstenzusatzteils 16 auf eine Resonanzfrequenz des elektrischen Antriebs ab.

Wird die elektrisch angetriebene Zahnbürste von einem Benutzer bei der Zahnreinigung mit den freien Enden des Borstenfelds 12 und des Borstenzusatzfelds 17 auf die Oberfläche der Zähne aufgesetzt, so hat dies zur Folge, dass die durch den Resonanzeffekt angeregte Bewegung des Borstenzusatzfelds 17 in Borstenrichtung gedämpft wird. Sobald jedoch die Borstenbüschel des Borstenzusatzfelds 17 in den Bereich eines Zahnzwischenraums, also in einen Interdentalbereich gelangen, so wird die genannte Bewegung des Borstenzusatzfelds 17 in Borstenrichtung nicht mehr durch die Oberfläche der Zähne gedämpft.

Statt dessen werden die Borstenbüschel des Borstenzusatzfelds 17 aufgrund der durch den Resonanzeffekt angeregten Bewegung in Richtung des Pfeils 19 gerade in den Zahnzwischenraum hineinbewegt. In einem Interdentalbereich führen die Borstenbüschel des Borstenzusatzfelds 17 eine stochernde Bewegung gerade in Richtung des Zahnzwischenraums aus. Auf diese Weise wird die Reinigung des Zahnzwischenraums verbessert.

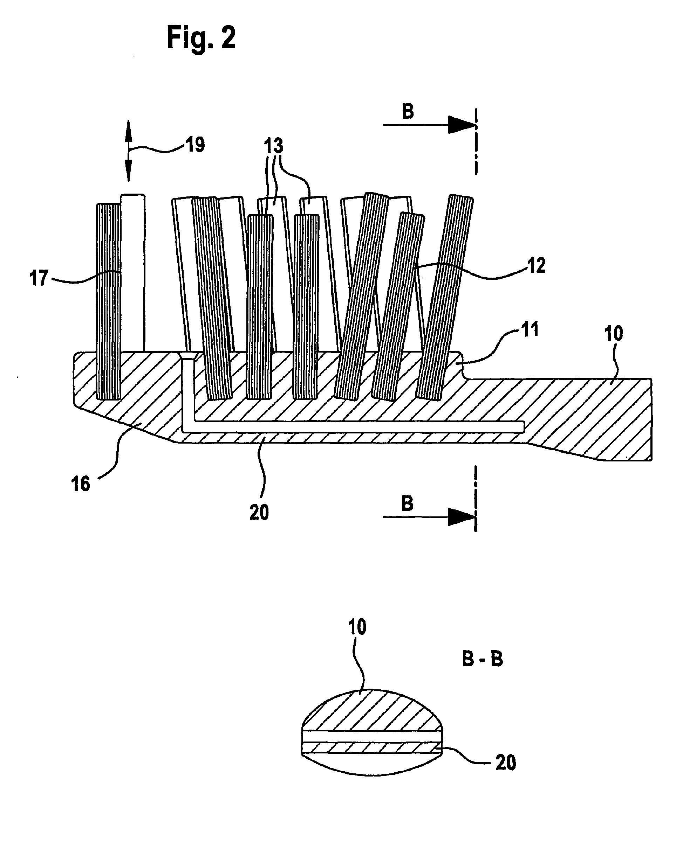

In der Figur 2 ist ein zweites Ausführungsbeispiel einer elektrisch angetriebenen Zahnbürste dargestellt, die weitgehend dem ersten Ausführungsbeispiel der Figur 1 entspricht. Gleichartige Bauteile sind deshalb mit gleichen Bezugszeichen gekennzeichnet.

Im Unterschied zu der Figur 1 wird jedoch bei der Figur 2 das Federelement durch einen Steg 20 gebildet, die kein zusätzliches Bauteil darstellt. Der Steg 20 ist einstückig mit dem Trägerrohr 10 und dem Borstenzusatzteil 16 verbunden. Durch die Auswahl eines entsprechenden Materials für den Steg 20, insbesondere eines entsprechenden Kunststoffs, sowie durch eine entsprechende Anpassung der Abmessungen, insbesondere der Dicke des Stegs 20, können dem Steg 20 federnde Eigenschaften zugeordnet werden, die den federnden Eigenschaften des Federelements der Figur 1 entsprechen.

Eine besondere Führung des Stegs 20 und/oder des Borstenzusatzteils 16 ist bei der Figur 2 nicht erforderlich. Diese Führung wird durch die einstückige Ausgestaltung des Stegs 20, des Borstenzusatzteils 16 und des Trägerrohrs 10 bereits erreicht.

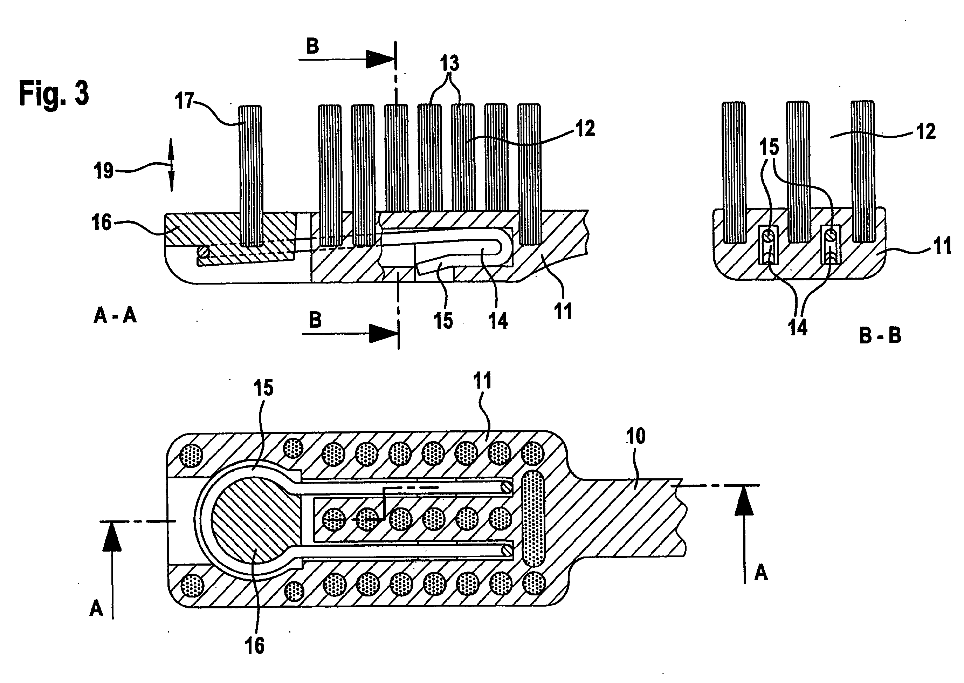

In der Figur 3 ist ein drittes Ausführungsbeispiel einer elektrisch angetriebenen Zahnbürste dargestellt, die weitgehend dem ersten Ausführungsbeispiel der Figur 1 entspricht. Gleichartige Bauteile sind deshalb mit gleichen Bezugszeichen gekennzeichnet.

Im Unterschied zu der Figur 1 ist jedoch bei der Figur 3 das Federelement 15 als U-förmige Drahtfeder ausgebildet. Die beiden Enden des Federelements 15 der Figur 3 sind dabei in der Ausnehmung 14 des Trägerrohrs 10 festgeklemmt. In ihrem bogenförmigen Bereich ist das Federelement 15 der Figur 3 mit dem Borstenzusatzteil 16 verbunden.

Die Ausnehmung 14 ist zumindest teilweise als spaltförmige Öffnungen in dem Borstenteil 11 fortgesetzt. Die als Federelement 15 dienende Drahtfeder ist innerhalb dieser Öffnungen angeordnet. Damit wird die Bewegung des Federelements 15 im Vergleich zur Figur 1 bei der Figur 3 nicht durch das Borstenteil 11 begrenzt. Bei der Figur 3 kann das Borstenzusatzteil 16 somit eine Bewegung mit einer großen Amplitude ausführen.

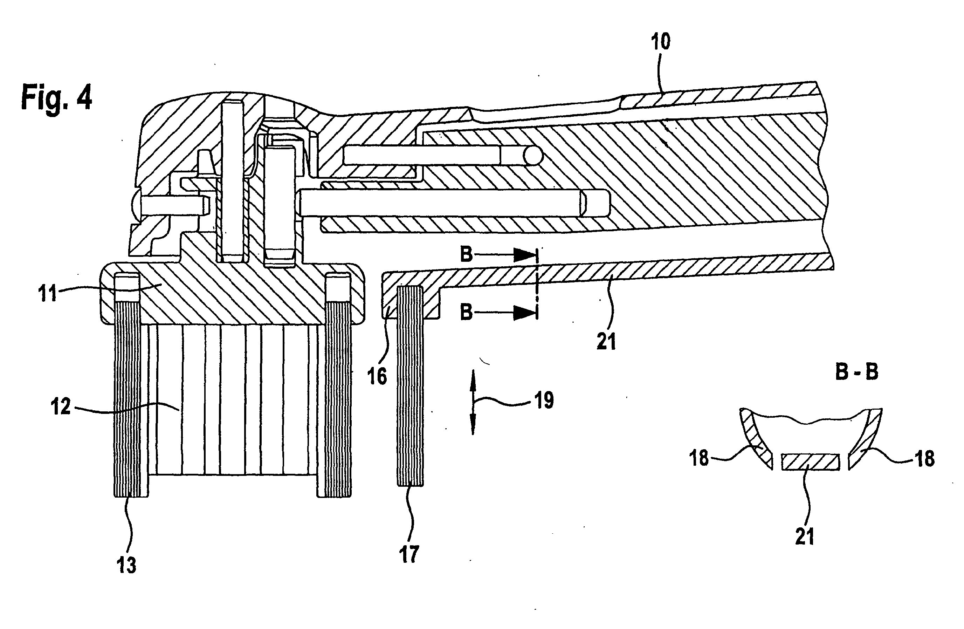

In der Figur 4 ist ein viertes Ausführungsbeispiel einer elektrisch angetriebenen Zahnbürste dargestellt. Gleichartige Bauteile sind mit gleichen Bezugszeichen gekennzeichnet.

Im Unterschied zu den Figuren 1 bis 3 wird bei der Figur 4 das Borstenteil 11 nicht nur in eine zur Längsachse des Trägerrohrs 10 alternierende Schwenkbewegung versetzt, sondern auch oder nur in eine Dreh- oder Schwenkbewegung um eine zur Borstenrichtung parallele Achse. Dies wird durch ein Umlenkgetriebe oder dergleichen erreicht, das in dem Trägerrohr 10 untergebracht ist.

Ähnlich wie in der Figur 2, so ist in der Figur 4 ein Steg 21 einstückig mit dem Trägerrohr 10 verbunden. Das freie Ende des Stegs 21 geht dann in das Borstenzusatzteil 16 über. Wie insbesondere aus dem Querschnitt B-B der Figur 4 zu entnehmen ist, wird der Steg 21 von den Seitenwänden 18 des Trägerrohrs 10 geführt.

Im eingeschalteten Zustand wird das an dem Steg 21 gehaltene Borstenzusatzteil 16 mit dem Borstenzusatzfeld 17 aufgrund des beschriebenen Resonanzeffekts in eine Bewegung in Richtung des Pfeils 19 versetzt. Der genannte Resonanzeffekt kann bei der Figur 4 durch die alternierende Dreh- oder Schwenkbewegung des Borstenteils 11 hervorgerufen werden.

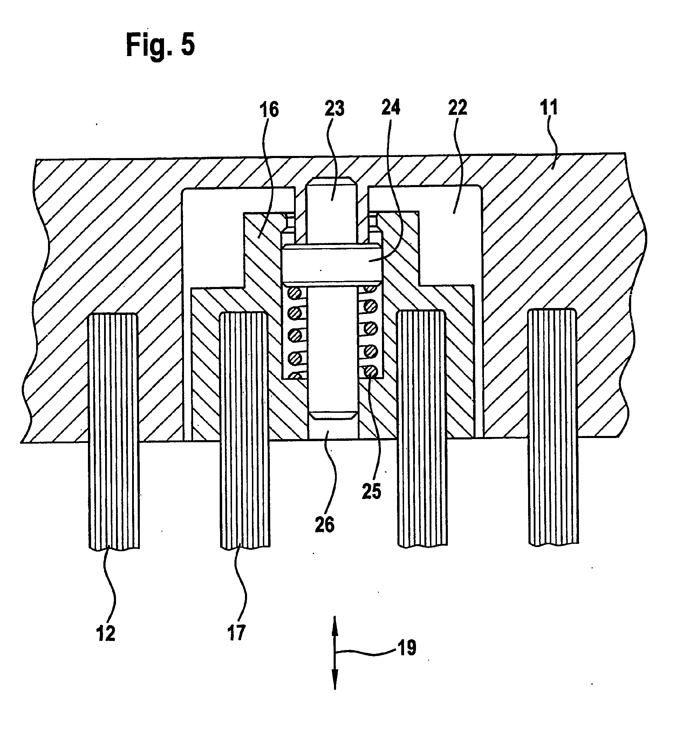

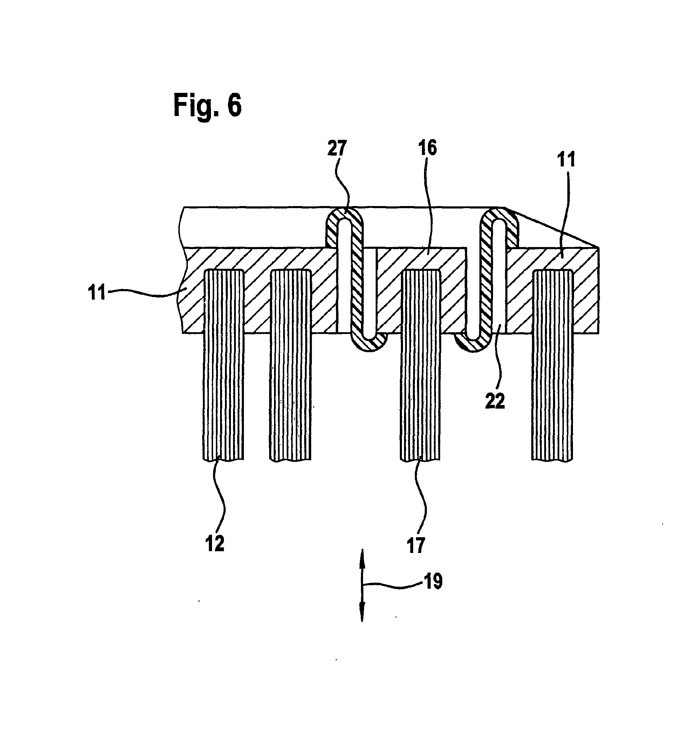

In den Figuren 5 und 6 sind zwei weitere Ausführungsbeispiele einer elektrisch angetriebenen Zahnbürste dargestellt. Beide Ausführungsbeispiele können alternativ oder additiv bei den Ausführungsbeispielen der Figuren 1 bis 4 eingesetzt werden. Gleichartige Bauteile sind deshalb mit gleichen Bezugszeichen gekennzeichnet.

In der Figur 5 ist das Borstenteil 11 mit einer Ausnehmung 22 versehen, innnerhalb der das Borstenzusatzteil 16 angeordnet ist. Die Ausnehmung 22 und das Borstenzusatzteil 16 sind zylindrisch ausgebildet und ineinander gesteckt. Mit dem Borstenteil 11 ist ein Führungsstift 23 fest verbunden, der parallel zu dem Pfeil 19 sowie in Richtung des Borstenzusatzteils 16 absteht. Auf dem Führungsstift 23 ist ein Ring 24 gehalten, auf dem sich ein Federelement 25 abstützt. Bei dem Federelement 25 handelt es sich in der Figur 5 um eine Schraubenfeder. Mit ihrem anderen Ende liegt das Federelement 25 an dem Borstenzusatzteil 16 an. Weiterhin ist in dem Borstenzusatzteil 16 eine Bohrung 26 enthalten, in die der Führungsstift 23 gleitend eintaucht.

Im eingeschalteten Zustand der elektrisch angetriebenen Zahnbürste wird durch den beschriebenen Resonanzeffekt das Borstenzusatzteil 16 in eine Bewegung in Richtung des Pfeils 19 angeregt. Das Borstenzusatzteil 16 wird dabei von dem Führungsstift 23 geführt. Der Resonanzeffekt entsteht aufgrund des zwischen dem Borstenzusatzteil 16 und dem Borstenteil 11 wirksam werdenden Federelements 25.

Die Figur 6 entspricht weitgehend der Figur 5. Im Unterschied zur Figur 5 ist jedoch bei der Figur 6 das Borstenteil 11 mit Hilfe eines einstückigen Federelements 27 direkt mit dem Borstenzusatzteil 16 verbunden. Bei dem Federelement 27 kann es sich beispielsweise um ein zylinderförmiges Bauteil handeln, dessen freie Ränder mit dem Borstenteil 11 und mit dem Borstenzusatzteil 16 verbunden sind.

Das Federelement 26 kann aus einem elastischen Material bestehen, beispielsweise aus einem Kunststoff. Das Borstenteil 11, das Borstenzusatzteil 16 und das Federelement 27 können als Mehrkomponenten-Spritzgussteil aus Kunststoff hergestellt werden.

## Patentansprüche

1. Elektrische Zahnbürste mit einem Borstenteil (11), das in eine erste Bewegung versetzbar ist, wobei ein Borstenzusatzteil, (16) mit Borstenbüscheln vorgesehen ist, das mit dem Borstenteil (11) über ein Federelement (15; 20; 21; 25; 27) verbunden ist, und das in eine zweite Bewegung versetzbar ist, die sich von der ersten Bewegung des Borstenteils (11) unterscheidet, wobei die zweite Bewegung des Borstenzusatzteils (16) von der ersten Bewegung des Borstenteils (11) durch einen Resonanzeffekt anregbar ist, **dadurch gekennzeichnet, dass** die zweite Bewegung des Borstenzusatzteils (16) in Borstenrichtung (19) erfolgt.

2. Zahnbürste nach Anspruch 1, **dadurch gekennzeichnet, daß** das Borstenteil (11), das Borstenzusatzteil (16) und das Federelement (20, 21, 27) einstückig ausgebildet sind.

3. Zahnbürste nach einem der vorstehenden Ansprüche, **dadurch gekennzeichnet, daß** das Borstenzusatzteil (16) und/oder das Borstenteil (11) in eine sich fortlaufend wiederholende Bewegung versetzbar sind.

4. Zahnbürste nach Anspruch 3, **dadurch gekennzeichnet, dass** das Borstenzusatzteil (16) derart ausgebildet und auf die sich fortlaufend wiederholende Bewegung des Borstenteils (11) abgestimmt ist, daß sich der Resonanzeffekt ergibt.

5. Zahnbürste nach einem der vorstehenden Ansprüche, **dadurch gekennzeichnet, daß** die zweite Bewegung des Borstenzusatzteils (16) eine größere Amplitude aufweist als die erste Bewegung des Borstenteils (11).

6. Zahnbürste nach Anspruch 1, **dadurch gekennzeichnet, dass** das Borstenzusatzteil (16) derart geführt ist, daß es sich nur in Borstenrichtung (19) bewegen kann.

## Claims

1. An electric toothbrush with a bristle section (11), which can be put in a primary motion, an additional bristle section (16), being provided with clusters of bristles, which is joined with the bristle section (11) by means of a spring component (15; 20; 21; 25; 27), and which can be put in a secondary motion that is different from the primary motion of the bristle section (11), it being possible for the secondary motion of the additional bristle section (16) to be set off by the primary motion of the bristle section (11) by means of a resonance effect, **characterized in that** the secondary motion of the additional bristle section (16) occurs in the bristle direction (19).

2. The toothbrush according to Claim 1, **characterized in that** the bristle section (11), the additional bristle section (16) and the spring component (20, 21, 27) are fashioned in a single piece.

3. The toothbrush according to one of the preceding claims, **characterized in that** the additional bristle section (16) and/or the bristle section (11), can be put in a continuously repeating motion.

4. The toothbrush according to Claim 3, **characterized in that** the additional bristle section is fashioned in such a way and is timed with the continuously repeating motion of the bristle section (11) in such a way that the resonance effect results.

5. The toothbrush according to one of the preceding claims, **characterized in that** the secondary motion of the additional bristle section (16) exhibits a greater amplitude than the primary motion of the bristle section (11).

6. The toothbrush according to Claim 1, **characterized in that** the additional bristle section (16) is guided in such a way that it can only move in the bristle direction (19).

## Revendications

1. Brosse à dents électrique avec une section de poils (11), qui peut être placée dans un mouvement primaire, une section de poils supplémentaire (16), étant pourvue de groupements de poils, laquelle est jointe à la section de poils (11) au moyen d'un composant de type ressort (15 ; 20 ; 21 ; 25 ; 27), et qui peut être placée dans un mouvement secondaire qui est différent du mouvement primaire de la section de poils (11), cela étant possible que le mouvement secondaire de la section de poils supplémentaire (16) soit désactivé par le mouvement primaire de la section de poils (11) au moyen d'un effet de résonance, **caractérisée en ce que** le mouvement secondaire de la section de poils supplémentaire (16) s'effectue dans la direction des poils (19).

2. Brosse à dents selon la revendication 1, **caractérisée en ce que** la section de poils (11), la section de poils supplémentaire (16) et le composant de type ressort (20, 21, 27) sont façonnés en une pièce unique.

3. Brosse à dents selon l'une des revendications précédentes, **caractérisée en ce que** la section de poils supplémentaire (16) et/ou la section de poils (11), peuvent être placées dans un mouvement se répétant de façon continue.

4. Brosse à dents selon la revendication 3, **caractérisée en ce que** la section de poils supplémentaire est façonnée d'une manière telle et est synchronisée avec le mouvement se répétant de façon continue de la section de poils (11) d'une manière telle que l'effet de résonance en résulte.

5. Brosse à dents selon l'une des revendications précédentes, **caractérisée en ce que** le mouvement secondaire de la section de poils supplémentaire (16) présente une plus grande amplitude que le mouvement primaire de la section de poils (11).

6. Brosse à dents selon la revendication 1, **caractérisée en ce que** la section de poils supplémentaire (16) est guidée d'une manière telle qu'elle peut seulement se déplacer dans la direction des poils (19).
